# NEUE EUROPÄISCHE PATENTSCHRIFT

(11) **EP 2 746 128 B2**
(45) Veröffentlichungstag und Bekanntmachung des Hinweises auf die Entscheidung über den Einspruch: **08.10.2025**
(45) Hinweis auf die Patenterteilung: 11.03.2020
(21) Anmeldenummer: 13195840.7
(22) Anmeldetag: 05.12.2013
(51) Int. Cl.: B61D 17/04

(54) **Wagenkasten eines Schienenfahrzeugs mit einem Langträger, welcher ein Verbindungsblech mit Krümmung umfasst**
Body of a rail vehicle with a longitudinal support member, comprising a connecting panel with curvature
Caisse de wagon d'un véhicule ferroviaire dotée d'un support longitudinal comprenant une tôle de liaison avec courbure

(30) Priorität: 19.12.2012 DE 102012223821
(43) Veröffentlichungstag der Anmeldung: 25.06.2014
(73) Patentinhaber: Siemens Mobility GmbH, 80997 München (DE)
(72) Erfinder: Baumann, Stefan, 86609 Donauwörth (DE); Bohrer, Markus, 90461 Nürnberg (DE)
(74) Vertreter: Siemens Patent Attorneys

(56) Entgegenhaltungen:
- EP-A1- 1 057 705
- WO-A1-99/62752
- DE-A1- 102007 022 198
- DE-A1- 19 501 805
- DE-A1- 2 142 714
- JP-A- 2011 235 732
- JP-U- S5 929 355
- US-A1- 2010 089 283

## Beschreibung

Die Erfindung betrifft ein Schienenfahrzeug des Personenverkehrs mit einem Wagenkasten, welcher zumindest ein horizontales Langträgerblech und zumindest eine vertikale Tür- und/oder Fenstersäule aufweist, welche stoffschlüssig miteinander verbunden sind.

Bei Wagenkästen in Differentialbauweise sind Tür- und/oder Fenstersäulen meist gekantete, teilweise auch geschlossene, rohrförmige Bauteile mit rechteckigem Querschnitt. Diese werden rechtwinklig an die in Längsrichtung des Schienenfahrzeugs verlaufenden Langträger, insbesondere Dachlangträger und/oder Untergestelllangträger, gestoßen und mit diesem verschweißt. Die Stoßstellen, insbesondere jene, die quer zum Dachlangträger und damit senkrecht zur Längsrichtung des Schienenfahrzeugs verlaufen, sind mechanisch hoch beansprucht und aufgrund des großen Kerbfaktors kritisch und entsprechend dimensioniert auszulegen oder zu verstärken. Zur Verstärkung werden beispielsweise zusätzlich verstärkende Bleche in die Ecken zwischen Langträger und Tür- und/oder Fenstersäule geschweißt, wie beispielsweise in DE 10 2007 022 198 A1, WO 99/62752 A1 oder EP 1 057 705 A1 offenbart, oder gleich ganze Knotenbauteile verwendet, um die Langträger und die Tür- und/oder Fenstersäulen miteinander zu verbinden.

Der Erfindung liegt die Aufgabe zugrunde, einen hochstabilen und gleichzeitig kostengünstig herzustellenden Wagenkasten eines Schienenfahrzeugs bereitzustellen.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Ein erfindungsgemäßes Schienenfahrzeug des Personenverkehrs, insbesondere des Personennahverkehrs, umfasst einen Wagenkasten mit zumindest einem Langträger, insbesondere einem Dachlangträger oder einem Untergestelllangträger, und zumindest einer Tür- und/oder Fenstersäule. Der Langträger verläuft in horizontaler Richtung, insbesondere in Längsrichtung des Schienenfahrzeugs, die Tür- und/oder Fenstersäule hingegen verläuft orthogonal zum Langträger und damit in vertikaler Richtung. Der Langträger umfasst ein Langträgerblech. Das Langträgerblech umfasst seinerseits wiederum ein Verbindungsblech. Das Verbindungsblech weist einen horizontalen Bereich in axialer Richtung des Langträgers auf und einen vertikalen Bereich in Richtung der Tür- und/oder Fenstersäule. Es ist beispielsweise T-förmig ausgestaltet. Die Tür- und/oder Fenstersäule ist mit dem vertikalen Bereich des Verbindungsblechs stoffschlüssig verbunden, insbesondere verschweißt. Das Verbindungsblech dient der stoffschlüssigen Verbindung von Langträger und Tür- und/oder Fenstersäule und somit auch zur Übertragung von Kräften zwischen Langträger und Tür- und/oder Fenstersäule.

Das Verbindungsblech ist zur Reduzierung von Kerbspannungen erfindungsgemäß zwischen dem vertikalen Bereich und dem horizontalen Bereich gekrümmt, insbesondere konkav gekrümmt. Es weist z.B. Radien an Übergängen von dem vertikalen Bereich auf den horizontalen Bereich des Verbindungsblechs auf. Beispielsweise betragen die Radien zumindest 30 mm, insbesondere mindestens 100 mm. Höchstens beträgt ein Radius 300 mm, insbesondere höchstens 200 mm.

Das Verbindungsblech und die Tür- und/oder Fenstersäule können fluchtend oder einander überlappend angeordnet und miteinander verbunden sein. In beiden Fällen ist eine Stirnseite des vertikalen Bereichs des Verbindungsblechs mit einer Schnittstelle, beispielsweise einer Stirnseite der Tür- und/oder Fenstersäule stoffschlüssig verbunden, insbesondere verschweißt, wobei die Schnittstelle der Tür- und/oder Fenstersäule eine komplementäre Kontur zur Stirnseite des Verbindungsblechs aufweist, wobei die Breite der Schnittstelle der Tür- und/oder Fenstersäule geringer ist als die Breite der Stirnseite des Verbindungsblechs. Dadurch lassen sich leicht Fertigungstoleranzen ausgleichen.

Erfindungsgemäß sind das Verbindungsblech und das Langträgerblech fügestellenfrei verbunden. Verbindungsblech und Langträgerblech sind monolithisch ausgestaltet.

Ein Blech ist ein flaches, meist eben ausgebildetes Werkstück mit einer Unter- und einer Oberseite und entsprechend seiner geometrischen Form mit einer entsprechenden Anzahl Stirnseiten. Weist ein Blech eine viereckige Form auf, weist es vier Stirnseiten auf. Sind die Kanten zwischen sich gegenüberliegenden Unter- und Oberseite und einer Stirnseite rechtwinklig, entspricht die Höhe der Stirnseite der Dicke des Blechs.

Das Verbindungsblech besteht weiterbildungsgemäß aus einem Metall- oder einer Metalllegierung, insbesondere aus einem Stahl, einem Edelstahl oder aus Aluminium. Das Langträgerblech besteht aus dem gleichen Material wie das Ver-bindungsblech. Darüber hinaus kann es die gleiche Dicke aufweisen. Einer weiteren Weiterbildung nach weist das Langträgerblech jedoch eine, von der Dicke des Ver bindungsblechs abweichende, geringere Dicke auf.

Das Verbindungsblech ist verstärkt mechanischen Belastungen ausgesetzt, weshalb es aus einem hochfesten Material gefertigt ist.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
Fig. 1 zeigt schematisch eine Verbindung einer Fenstersäule mit einem Dachlangträger des Stands der Technik,
Fig. 2 zeigt schematisch eine erfindungsgemäße Verbindung einer Fenstersäule mit einem Dachlangträger,
Fig. 3 zeigt perspektivisch eine Ausgestaltung eines Wagenkastens,
Fig. 4 zeigt die Ausgestaltung aus Fig. 3 aus einer weiteren Perspektive.

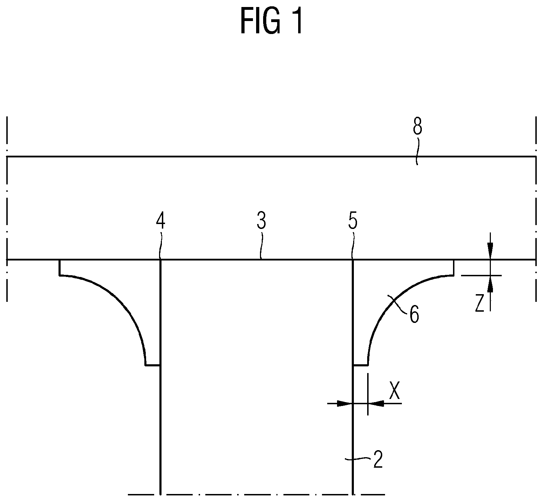

In Fig. 1 ist eine Verbindung einer Fenstersäule 2 mit einem Dachlangträger 8 des Stands der Technik schematisch dargestellt. Beide sind rohrförmig ausgestaltet mit einem rechteckigen Querschnitt. Eine Schweißnaht 3 läuft rund um die Stirnseite der Fenstersäule 2. An den seitlichen Kanten 4 und 5 ist eine hohe mechanische Belastung zu erwarten, weshalb diese Ecken mit profilierten, meist gekanteten oder tiefgezogenen Verstärkungsblechen 6 versehen und damit ausgesteift sind. Dadurch entsteht ein nicht zu vermeidender, wenn auch geringer horizontaler und vertikaler Versatz X und Z zwischen Verstärkungsblech 6 und Fenstersäule 2 oder Dachlangträger 8.

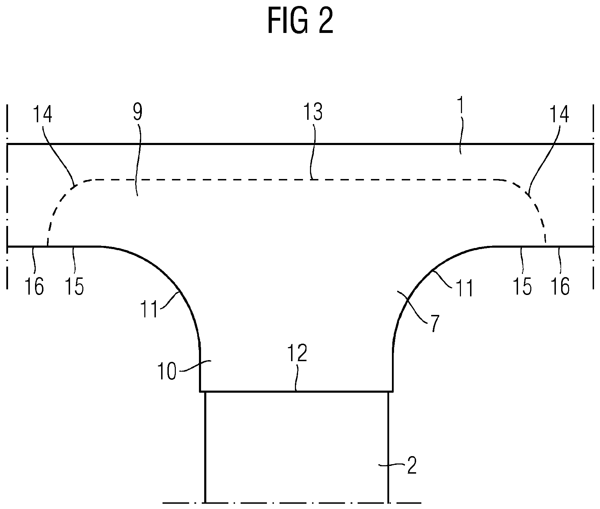

In der erfindungsgemäßen Verbindung aus Fig. 2 dagegen umfasst der Dachlangträger ein Langträgerblech 1 und ein Verbindungsblech 7, welches ein zum Langträgerblech axialen und damit horizontalen Bereich 9 und einen zum Dachlangträger orthogonalen, vertikalen Bereich 10 aufweist. Darüber hinaus sind Radien 11 an den Übergängen von horizontalem 9 und vertikalem Bereich 10 ausgeformt, so dass sich das Verbindungsblech 7 und damit der Langträger zu einer Stirnseite 12 des vertikalen Bereichs 10 hin verjüngt, insbesondere über die Radien 11 vorgegebener Größe stetig verjüngt. Die Radien 11 betragen dabei zwischen 30 mm und 300 mm, insbesondere zwischen 100 mm und 200 mm.

Hier sind Langträgerblech 1 und Verbindungsblech 7 einstückig und damit fügestellenfrei aus einem Blech geformt. Die gestrichelte Linie 13 zeigt lediglich eine willkürlich festgelegte Grenze an. Das Langträgerblech 1 weist hier zumindest einen T-förmig ausgestalteten Bereich auf. Hergestellt wird ein solches Langträgerblech 1 mit zumindest einem integrierten Verbindungsblech 7 beispielsweise durch Stanzen oder spanende Verfahren. Das Verbindungsblech 7 ist T-förmig ausgestaltet, wobei die Ecken des Querbalkens des "T", also des horizontalen Bereichs 9 des Verbindungsblechs 7, durch Radien 14 abgerundet sind. Eine freie, untere Stirnseite 15 des ho-rizontalen Bereichs 9 des T-förmigen Verbindungsblechs 7 ist fluchtend mit einer freien, unteren Stirnseite 16 des Langträgerblechs 1 angeordnet. Verbindungsblech 7 und Langträgerblech 1 bilden ein gemeinsames Blech gleicher Dicke.

Verbindungsblech 7 und das Langträgerblech 1 bestehen aus demselben Werkstoff.

Das Material des Langträgerblechs 1 ist beispielsweise Stahl. Es weist eine geringere Dicke auf, als das Verbindungsblech 7, welches ebenfalls aus Stahl hergestellt ist.

Eine Fenstersäule 2 ist mit der Stirnseite 12 des sich länglich in vertikaler Richtung erstreckenden, vertikalen Bereichs 10 des Verbindungsblechs 7 verschweißt.
Dadurch sind das Langträgerblech 1 und die Fenstersäule 2 zur Übertragung von Kräften zwischen Langträgerblech 1 und Fenstersäule 2, insbesondere zur Aufnahme und Übertragung von Kräften mit einer Richtungskomponente in Längsrichtung des Schienenfahrzeugs stoffschlüssig miteinander verbunden.

Hier ist die Breite der Stirnseite 12 des vertikalen Bereichs 10 des Verbindungsblechs 7 breiter als die an sie stoßende und mit ihr stoffschlüssig verbundene Stirnseite der Fenstersäule 2. Ansonsten weist die genannte Stirnseite der Fenstersäule 2 eine komplementäre Kontur zur Stirnseite 12 des vertikalen Bereichs 10 des Verbindungsblechs 7 auf, so dass bei vorgegebenen Toleranzen das Verbindungsblechs 7 auf die Fenstersäule 2 passt.

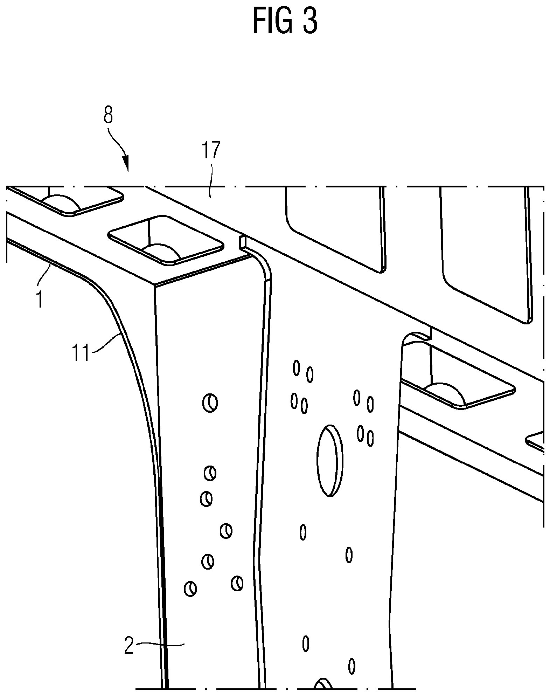

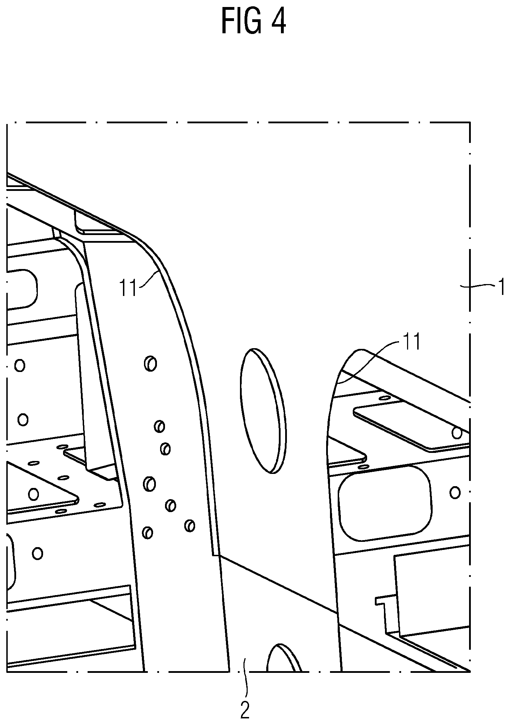

Fig. 3 und Fig. 4 zeigen ein Ausführungsbeispiel eines Wagenkastens perspektivisch, welches nicht unter den Wortlaut des Patentanspruchs 1 fällt. Der Langträger 8 umfasst hier ein Stützgerüst 17 und ein aufeiner Außenseite des Stützgerüsts 17 angeordnetes Langträgerblech 1. Das Langträgerblech weist einen T-förmig ausgestalteten Bereich auf. Es kann selbstverständlich mehrere, insbesondere nebeneinander angeordnete T-förmige Bereich aufweisen. Alternativ kann es auch die Form eines Kreuzes oder jede weitere Form annehmen, mit einem vertikalen und horizontalen Bereich und Radien 11 dazwischen. Die vertikalen Bereiche bilden Verbindungsstellen zu Tür- und/oder Fenstersäulen 2. Hier ist die Fenstersäule 2 von außen betrachtet hinter das Verbindungsblech des Langträgerblechs geführt und dort mit ihm verschweißt. Fenstersäule 2 und Verbindungsblech überlappen sich.

## Patentansprüche

1. Schienenfahrzeug des Personenverkehrs mit einem Wagenkasten, welcher zumindest ein horizontales Langträgerblech (1) und zumindest eine vertikale Tür- und/oder Fenstersäule (2) aufweist, welche stoffschlüssig miteinander verbunden sind, wobei das Langträgerblech (1) ein integriertes Verbindungsblech(7) mit einem horizontalen (9) und einem vertikalen Bereich (10) umfasst, wobei das Verbindungsblech (7) zur Reduzierung von Kerbspannungen zwischen dem vertikalen Bereich (10) und dem horizontalen Bereich (9) gekrümmt ist, wobei eine Stirnseite (12) des vertikalen Bereichs (10) des Verbindungsblechs (7) mit einer Stirnseite der Tür- und/oder Fenstersäule (2) stoffschlüssig verbunden ist, wobei die Stirnseite der Tür- und/oder Fenstersäule (2) eine komplementäre Kontur zur Stirnseite (12) des Verbindungsblechs (7) aufweist, wobei die Breite der Stirnseite der Tür- und/oder Fenstersäule (2) geringer ist als die Breite der Stirnseite (12) des Verbindungsblechs (7), wobei das Verbindungsblech (7) mit dem Langträgerblech (1) fügestellenfrei verbunden ist

2. Schienenfahrzeug nach Anspruch 1,
**dadurch gekennzeichnet, dass** das Verbindungsblech (7) zur Reduzierung von Kerbspannungen einen Radius (11) zwischen dem vertikalen Bereich (10) und dem horizontalen Bereich (9) aufweist.

3. Schienenfahrzeug nach Anspruch 1 oder 2,
**dadurch gekennzeichnet, dass** das Verbindungsblech (7) T-förmig ausgestaltet ist.

## Claims

1. Rail vehicle for passenger transport with a car body which has at least one horizontal side-sill plate (1) and at least one vertical door and/or window pillar (2) which are substance-bonded to one another, wherein the side-sill plate (1) comprises an integrated connecting plate (7) with a horizontal (9) and a vertical region (10), wherein the connecting plate (7) is curved to reduce notch stresses between the vertical region (10) and the horizontal region (9), wherein an end face (12) of the vertical region (10) of the connecting plate (7) is substance-bonded to an end face of the door and/or window pillar (2), wherein the end face of the door and/or window pillar (2) has a complementary contour to the end face (12) of the connecting plate (7), wherein the width of the end face of the door and/or window pillar (2) is less than the width of the end face (12) of the connecting plate (7), wherein the connecting plate (7) is connected to the side-sill plate (1) without joints.

2. Rail vehicle according to claim 1,
**characterised in that** the connecting plate (7) to reduce notch stresses has a radius (11) between the vertical region (10) and the horizontal region (9).

3. Rail vehicle according to one of claims 1 or 2,
**characterised in that** the connecting plate (7) is embodied as T-shaped.

## Revendications

1. Véhicule ferroviaire du trafic des voyageurs, comprenant une caisse, qui a au moins une tôle ( 1 ) horizontale formant longeron et au moins une colonne ( 2 ) verticale de porte et/ou fenêtre, qui sont reliées l'une à l'autre à coopération de matière, dans lequel la tôle ( 1 ) formant longeron comprenant une tôle ( 7 ) intégrée de liaison ayant une partie ( 9 ) horizontale et une partie ( 10 ) verticale, la tôle ( 7 ) de liaison étant incurvée pour réduire les tensions de bordure entre la partie ( 10 ) verticale et la partie ( 9 ) horizontale, dans lequel un côté ( 12 ) frontal de la partie ( 10 ) verticale de la tôle ( 7 ) de liaison est relié à coopération de matière à un côté frontal de la colonne ( 2 ) de porte et/ou de fenêtre, le côté frontal de la colonne ( 2 ) de porte et/ou de fenêtre ayant un contour complémentaire du côté ( 12 ) frontal de la tôle ( 7 ) de liaison, la largeur du côté frontal de la colonne ( 2 ) de porte et/ou de fenêtre étant plus petite que la largeur du côté ( 12 ) frontal de la tôle ( 7 ) de liaison, dans lequel la tôle ( 7 ) de liaison est reliée sans point de joint à la tôle ( 1 ) formant longeron.

2. Véhicule ferroviaire suivant la revendication 1,
**caractérisé en ce que**
la tôle ( 7 ) de liaison a, pour réduire les tensions de bordure, un rayon ( 11 ) entre la partie ( 10 ) verticale et la partie ( 9 ) horizontale.

3. Véhicule ferroviaire suivant la revendication 1 ou 2, **caractérisé en ce que**
la tôle ( 7 ) de liaison est en forme de T.
